# EUROPEAN PATENT SPECIFICATION

(11) **EP 4 213 010 B1**
(45) Date of publication and mention of the grant of the patent: **19.06.2024**
(21) Application number: 23150830.0
(22) Date of filing: 10.01.2023
(51) Int. Cl.: G06F 3/12, G06F 9/4401

(54) **GUIDANCE CONTROL METHOD FOR DRIVER INSTALLATION, DEVICE REGARDING THE SAME, AND TERMINAL**
FÜHRUNGSSTEUERUNGSVERFAHREN FÜR FAHRERINSTALLATION, VORRICHTUNG DAFÜR UND ENDGERÄT
PROCÉDÉ DE COMMANDE DE GUIDAGE POUR INSTALLATION DE CONDUCTEUR, DISPOSITIF ASSOCIÉ À CELUI-CI ET TERMINAL

(30) Priority: 13.01.2022 CN 202210037386
(43) Date of publication of application: 19.07.2023
(73) Proprietor: Zhuhai Pantum Electronics Co., Ltd., Zhuhai, Guangdong (CN)
(72) Inventor: ZHANG, Qiang, Zhuhai, Guangdong (CN); ZHAO, Lijun, Zhuhai, Guangdong (CN); ZHANG, Xiangkui, Zhuhai, Guangdong (CN); HOU, Tao, Zhuhai, Guangdong (CN); LI, Yan, Zhuhai, Guangdong (CN)
(74) Representative: Sun, Yiming

(56) References cited:
- US-A1- 2020 026 526
- US-A1- 2021 006 669
- US-A1- 2021 096 795

## Description

### FIELD OF THE TECHNOLOGY

The present disclosure relates to a technical field of image formation, in particular to a guidance control method for driver installation, a guidance control device for driver installation, a terminal, and a computer-readable storage medium.

### BACKGROUND

Peripheral device is connected to a terminal, which may be a computer. The peripheral device receives job data sent by the terminal before the peripheral device starts to perform an imaging process, such as printing. Opening and editing of documents in the terminal is usually done through some document operation applications, such as Word, WPS and other applications. To send the document opened by the application in the terminal directly to the peripheral device, a driver is first installed in the peripheral device. A guide program may be set in a driver installation package, and the guide program is run to display searchable image forming devices for the user to choose. However, the user may not know the connection method between the image forming device and the terminal or may not know the connection method to the terminal that is supported by the image forming device. The user may only randomly select an image forming device, and then follow the guide program to perform subsequent operations. However, the connection mode between the terminal and the image forming device may vary, and subsequent operation complexity, success rate, or length of time required may also vary. When the user selects an image forming device whose follow-up operation is complicated, which has a low success rate, or which takes a long time, the user may face complicated follow-up operations or operation failures, or may run into a problem that it takes a long time to complete the driver installation, which brings unpleasant user experience to the user.

Document US 2020/026526 A1 discloses a terminal device which detects types of connections available between the terminal and a image forming device device and which adapts the display of driver installation options accordingly.

### SUMMARY

Embodiments of the present disclosure provide a guidance control method for driver installation, a guidance control device for driver installation, a terminal, and a computer-readable storage medium, to solve a technical problem that a user may encounter unpleasant user experience when the user does not know the functional configuration of the image forming device during the driver installation process.

In a first aspect, the present disclosure provides a guidance control method for driver installation. The method includes: obtaining a detection result of whether a terminal is equipped with a Bluetooth module; and according to the detection result, determining a driver installation user interface to be displayed.

In certain embodiment(s), the detection result indicates that the terminal is equipped with the Bluetooth module and the Bluetooth module is turned on, the method further includes: displaying on the driver installation user interface a list of image forming devices, and image forming devices as displayed in the list are each equipped with the Bluetooth module.

In certain embodiment(s), the detection result indicates that the terminal is equipped with the Bluetooth module and the Bluetooth module is not turned on, and the method further includes: displaying on the driver installation user interface a prompt to alert the user to turn on the Bluetooth module.

In certain embodiment(s), the detection result indicates that the terminal is not equipped with the Bluetooth module, and the method further includes: determining driver installation options for installing a driver according to connection information between image forming devices and the terminal; and displaying on the driver installation user interface the driver installation options.

In certain embodiment(s), the method further includes: obtaining an image forming device selected by a user through the driver installation user interface; acquiring wireless network configuration information configured for the image forming device as selected, and sending the wireless network configuration information to the image forming device as selected; acquiring a configuration result performed by the image forming device based on the wireless network configuration information; and determining whether to install a driver corresponding to the image forming device as selected according to the configuration result.

In certain embodiment(s), after acquiring a configuration result performed by the image forming device based on the wireless network configuration information,searching for the image forming device, and when the search result is failure, displaying driver installation options that may successfully install the driver; the driver installation options that may successfully install the driver are determined according to the connection information between the image forming device corresponding to the driver and the terminal.

In certain embodiment(s), when the search result is success, determining to install the driver corresponding to the image forming device.

In a second aspect, the present disclosure provides a guidance control device for driver installation, the guidance control device includes: an acquiring unit, configured to acquire a detection result of whether a Bluetooth module is set on the terminal; and a controlling unit, configured to determine the driver installation guide user interface to be displayed according to the detection result.

In certain embodiment(s), when the detection result acquired by the acquiring unit is that a Bluetooth module is installed on the terminal and the Bluetooth module is turned on, the driver installation guide user interface is used to display a list of preset image forming devices, and the list of preset image forming devices include devices each provided with a Bluetooth module.

In certain embodiment(s), when the detection result acquired by the acquiring unit is that the terminal is provided with a Bluetooth module and the Bluetooth module is not turned on, the driver installation guide user interface is used to prompt the user to turn on the Bluetooth module.

In certain embodiment(s), when the acquiring unit obtains the detection result that the Bluetooth module is not installed on the terminal, the driver installation guide user interface is used to display the driver installation options that may successfully install the driver, and the driver installation options that may successfully install the driver are determined based on the connection information between the image forming device corresponding to the driver and the terminal.

In certain embodiment(s), the acquiring unit is further configured to acquire the image forming device selected by the user on the driver installation guide user interface;the acquiring unit is further configured to acquire wireless network configuration information configured for the image forming device, and the driver installation guidance control device further includes a sending unit for sending the wireless network configuration information to the image forming device;the acquiring unit is further configured to acquire a configuration result of the wireless network configuration performed by the image forming device based on the wireless network configuration;the controlling unit 7is further configured to determine whether to install the driver corresponding to the image forming device according to the configuration result.

In certain embodiment(s), when the configuration result obtained by the acquiring unit is failure, the controlling unit is configured to display the driver installation options that may successfully install the driver, and the driver installation options that may successfully install the driver are determined by the connection information between the image forming device and the terminal.

In certain embodiment(s), the acquiring unit is further configured to acquire the image forming device selected by the user on the driver installation guide user interface; the acquiring unit is further configured to acquire wireless network configuration information configured for the image forming device, and the driver installation guidance control device further includes a sending unit for sending the wireless network configuration information to the image forming device;the acquiring unit is further configured to acquire a configuration result of the wireless network configuration performed by the image forming device based on the wireless network configuration;the controlling unit 7is further configured to determine whether to install the driver corresponding to the image forming device according to the configuration result.

In certain embodiment(s), when the configuration result obtained by the acquiring unit is failure, the controlling unit is configured to display the driver installation options that may successfully install the driver, and the driver installation options that may successfully install the driver are determined by the connection information between the image forming device and the terminal.

In certain embodiment(s), after the acquiring unit is further configured to acquire a configuration result of the wireless network configuration performed by the image forming device based on the wireless network configuration,the controlling unit is further configued to search for the image forming device, and when the search result fails, the controlling unit 701 displaying driver installation options that may successfully install the driver. The driver installation options that may successfully install the driver are determined according to the connection information between the image forming device corresponding to the driver and the terminal.

In certain embodiment(s), when the search result is success, the controlling unit 701 is used to determine to install the driver corresponding to the image forming device.

In a third aspect, the present disclosure provides a terminal, and the terminal comprises the guidance control device of the first aspect.

In a fourth aspect, the present disclosure provides an electronic device, comprising a memory, a processor and program instructions; the memory is configued to store information including program instructions, and the processor is configued to control the execution of the program instructions; the program instructions, when executed by the processor, implement the steps of the guidance control method of the first aspect.

In a fifth aspect, the present disclosure provides a non-transitory computer-readable storage medium, the computer-readable storage medium includes a stored program causes the device where the computer-readable storage medium is located to execute the guidance control method of the first aspect.

Certain embodiment(s) of the present disclosure reflect the following beneficial effects.

Detection of whether the terminal device supports the Bluetooth function is prioritized. When the terminal supports the Bluetooth function, the user is guided to select an image forming device that supports the Bluetooth function and complete the subsequent driver installation operation. In comparison to a scenario where the user selects an image forming device that supports a wireless network function and completes subsequent driver installation operations, the driver installation process according to certain embodiment(s) of the present disclosure takes less time, is of a higher success rate, and avoids a problem that the user may not use the wireless network when the terminal communicates with the image forming device, which brings convenience to the user.

### BRIEF DESCRIPTION OF THE DRAWINGS

To more clearly illustrate the technical solutions provided according to certain embodiment(s) of the present disclosure, the accompanying drawings are employed and are introduced below. The accompanying drawings in the following description are directed to certain embodiment(s) of the present disclosure. Those of ordinary skill in the art may obtain other drawings based on these drawings without exerting creative labor.
FIG. 1 is a schematic flowchart of a driver installation and guidance control method according to certain embodiment(s) of the present disclosure;
FIG. 2 is a schematic diagram of a driver installation and guidance user interface according to certain embodiment(s) of the present disclosure;
FIG. 3 is a schematic diagram of a driver installation and guidance user interface according to certain embodiment(s) of the present disclosure;
FIG. 4 is a schematic diagram of a driver installation and guidance user interface according to certain embodiment(s) of the present disclosure;
FIG. 5 is a schematic flowchart of a driver installation and guidance control method according to certain embodiment(s) of the present disclosure;
FIG. 6 is a schematic flowchart of a driver installation and guidance control method according to certain embodiment(s) of the present disclosure;
FIG. 7 is a schematic diagram of a driver installation and guidance control device according to certain embodiment(s) of the present disclosure; and
FIG. 8 is a schematic diagram of an electronic device according to certain embodiment(s) of the present disclosure.

### DETAILED DESCRIPTION

To help with understanding the technical solutions of the present disclosure, certain embodiments of the present disclosure are described below in conjunction with the accompanying drawings.

The described embodiments are only some, and not all, embodiments of the present disclosure. Based on the embodiments of the present disclosure, other embodiments obtained by persons of ordinary skill in the art without creative work all belong to the protection scope of the present disclosure.

### Implementation Example One

The present disclosure in certain embodiment(s) provides a guidance control method for driver installation, which is executed on a terminal, and in particular is executed on a guidance program for driver installation installed on the terminal. The guidance program for driver installation is directly included in the driver to be installed, and may also be set independently. The present disclosure does not intent to limit the particular form of the guidance program for driver installation. The driver is first stored in the terminal in the form of an installation package. After installed successfully, the driver is be used to convert job data provided by an application into data and instructions recognizable by the image forming device.

In certain embodiment(s), and from the principle of imaging, the image forming device may be, but not limited to, a laser printer, an inkjet printer, or an LED printer; from the functional point of view, the image forming device may be, but not limited to, a single-function printer, a copier, or a multi-function printer, where the multi-function includes one or more functions of scanning, faxing, and binding.

In certain embodiment(s), terminal may be a computer such as a personal computer (PC), a smart phone, a tablet, or the like.

In certain embodiment(s), the driver installation package may correspond to various types of image forming devices developed by a certain manufacturer. For example, a model name of P3500 indicates that the model supports devices with USB ports, a model name of P3500N indicates that the model supports devices with USB ports and wired networks, and a model name P3500NW indicates that the model supports devices with USB ports, wired network ports, and wireless network ports.

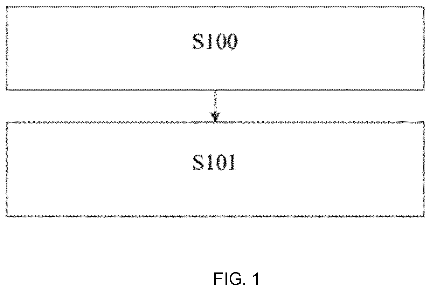

As schematically shown in FIG. 1, the guidance control method for driver installation includes one or more of the following steps.

S100: Obtaining a detection result of whether a Bluetooth module is configured in a terminal.

S101: According to the detection result, determining a driver installation and guidance user interface to be displayed.

After a driver installation and guidance program is started, the driver installation and guidance program sends a detection command to the terminal, to obtain whether the terminal is equipped with a Bluetooth module and whether the Bluetooth module is turned on, and then determines the driver installation and guidance user interface to be displayed according to the detection result.

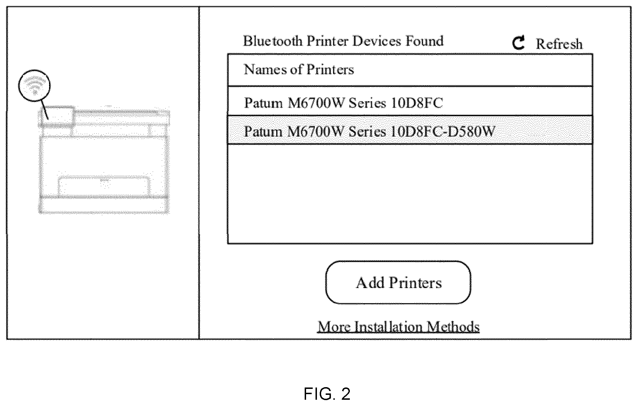

In certain embodiment(s), and as schematically shown in FIG. 2, when it is detected that a Bluetooth module is installed on the terminal and the Bluetooth module is turned on, the driver installation and guidance user interface is used to display a list of preset image forming devices, the image forming devices displayed in the list each include the Bluetooth module.

Before displaying the image forming device list, the guidance program for driver installation searches for an image forming device. After obtaining the list of image forming devices, the guidance comtrol program driver installation combines the model of the image forming device supported by the driver and whether the device is configured with a Bluetooth module, and determines the list of preset image forming devices, where the model of the image forming device as displayed in the list corresponds to the driver.

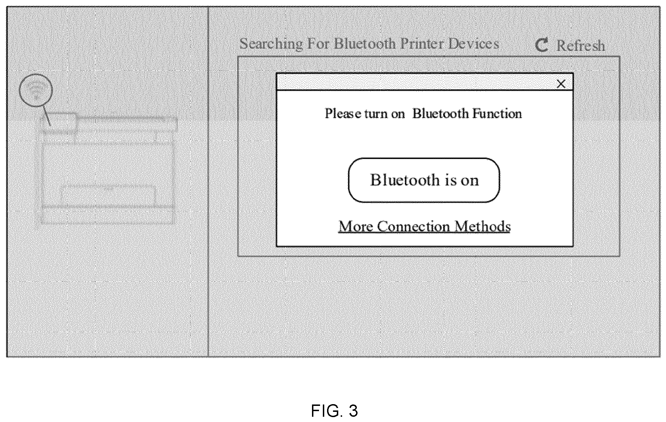

In certain embodiment(s), and as schematically shown in FIG. 3, when it is detected that the terminal is equipped with a Bluetooth module and the Bluetooth module is not turned on, the driver installation and guidance user interface is used to prompt the user to turn on the Bluetooth module.

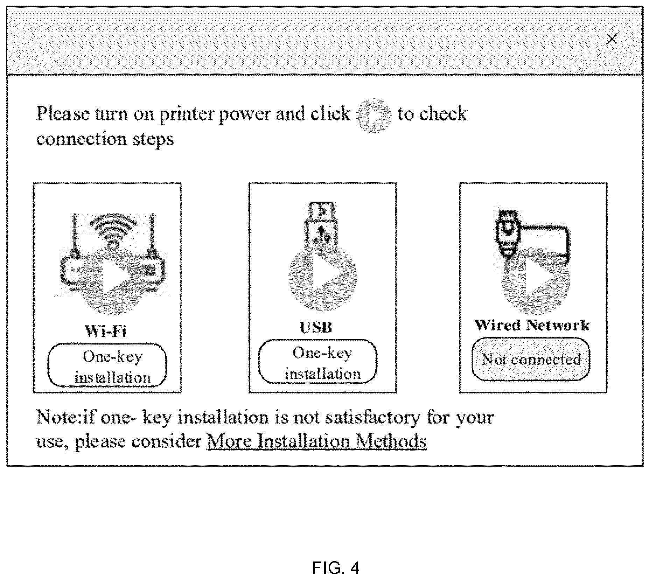

In certain embodiment(s), and as schematically shown in FIG. 4, when it is detected that the Bluetooth module is absent and not configured on the terminal, the driver installation and guidance user interface is used to display driver installation options that may successfully install the driver, and the driver installation options that may successfully install the driver are determined according to connection information between the image forming device and the terminal.

In certain embodiment(s), and as schematically shown in FIG. 3, after the guidance user interface for driver installation prompts the user to turn on Bluetooth, the guidance program for driver installation detects whether the Bluetooth is turned on, and once the Bluetooth is turned on, the guidance program for driver installation searches for the list of preset image forming devices mentioned in reference to FIG. 4.

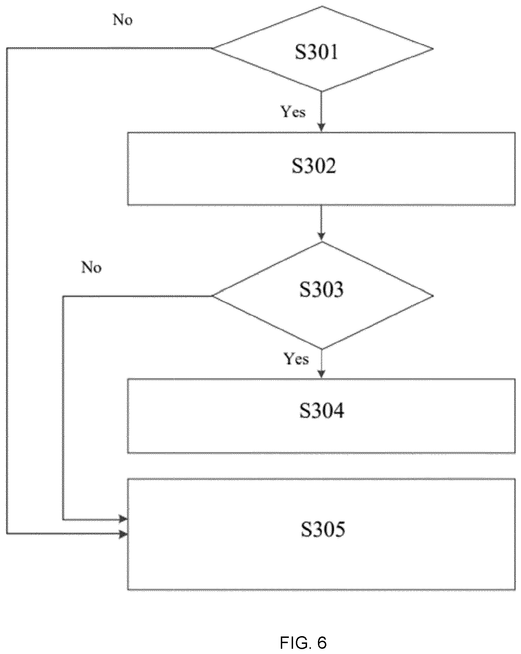

In certain embodiment(s), as shown in FIG. 6, and after the guidance program for driver installation displays the list of image forming devices provided with the Bluetooth module, the method further includes one or more of the following steps.

S201: Acquiring the image forming device selected by the user via the guidance user interface for driver installation.

S202: Obtaining wireless network configuration information configured for the image forming device, and sending the wireless network configuration information to the image forming device.

Obtaining the wireless network configuration information entered by the user via the guide user interface for driver installation, where the wireless network configuration information includes the wireless network name SSID and password. The wireless network name SSID may be the wireless network name SSID of the wireless network connected to the terminal.

S203: Obtaining a configuration result of wireless network configuration performed by the image forming device based on the wireless network configuration.

After the image forming device receives the wireless network configuration information sent by the terminal, the image forming device tries to connect to the wireless network corresponding to the wireless network configuration information, and feeds back the configuration result to the guidance program for driver installation. The configuration result may indicate that the image forming device successfully connects to the network corresponding to the wireless network configuration information, or that the image forming device fails to connect to the network corresponding to the wireless network configuration information.

S204: According to the configuration result, it is determined whether to install the driver corresponding to the image forming device.

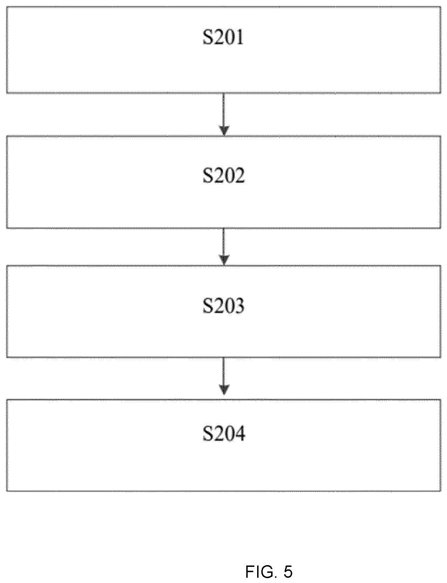

In certain embodiment(s), and as schematically shown in FIG. 5, the method further includes one or more of the following steps.

S301: Is the configuration successful?

If yes, execute S302; if not, execute S305.

S302: The guidance program for driver installation searches for the image forming device selected by the user within the same network.

In certain embodiment(s), the guidance program for driver installation searches for the image forming device selected by the user within the network to which the terminal is connected.

S303: Is the image forming device found?

### If yes, execute S304, if not, execute S305

S304: Installing the driver corresponding to the image forming device.

S305: Displaying driver installation options that may successfully install the driver program. The driver installation options that may successfully install the driver program are determined according to the connection information between the image forming device corresponding to the driver and the terminal, as schematically shown in FIG. 4.

In certain embodiment(s), and before S305 is displayed, prompt information may also be output, the prompt information is used to indicate that the network configuration of the image forming device is successful, but the image forming device is not found in the network segment to which the current terminal is connected.

In S305, the driver installation options that may successfully install the driver may be obtained by performing one or more of the following steps. The steps include: obtaining connection information between the image forming device corresponding to the driver and the terminal; determining driver installation options that may successfully install the driver according to the connection information; and displaying the driver installation options that may successfully install the driver.

The connection information between the image forming device corresponding to the driver and the terminal may be a USB connection, a wired connection, or a wireless connection.

The driver installation options that may successfully install the driver may be implemented according to one or more of the following steps.

A driver installation option corresponding to an allowed or permitted connection mode between the terminal and the peripheral device is displayed as of a first state; and a driver installation option corresponding to a disallowed connection mode between the terminal and the peripheral device is displayed as of a second state, where the first state represents that the user is allowed to select the driver installation option, and the second state represents that the user is not allowed to select the driver installation option.

In certain embodiment(s), only the driver installation options that may successfully install the driver are displayed, and the driver installation options that may not successfully install the driver are not displayed.

For an introduction to the driver installation options that may successfully install the driver, relevant contents of the Chinese patent application CN201810790142.0 may be referred to and are not reproduced here for brevity.

In certain embodiment(s), it is first determined as to whether the terminal supports the Bluetooth function. When the terminal is determined to support the Bluetooth function, the user is guided to select an image forming device that supports the Bluetooth function and to complete subsequent driver installation operation. In comparison to a situation where the user chooses an image forming device that supports the wireless network function and completes the subsequent driver installation operations, the driver installation process provided according to certain embodiment(s) of the present disclosure may take less time and be of a higher success rate, and avoids a technical problem where the user may not use the wireless network when the terminal communicates with the image forming device, all of which bring enhanced convenience to the user.

### Implementation Example Three

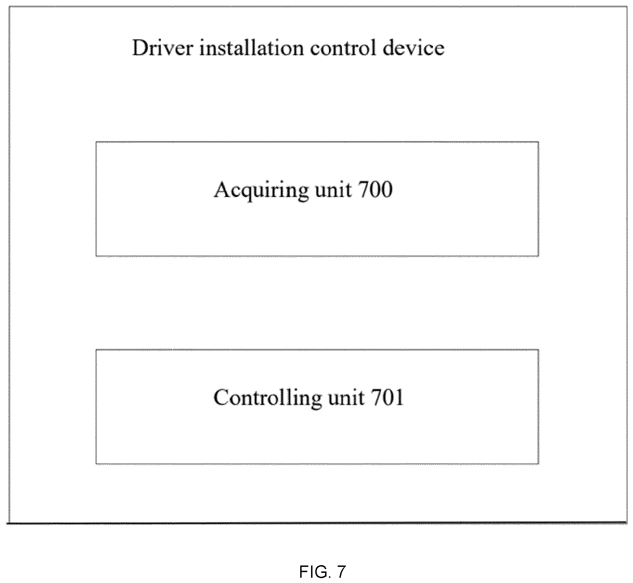

As schematically shown in FIG. 7, the present disclosure in certain embodiment(s) provides a driver installation guidance control device. The driver installing guidance control device includes an acquiring unit 700, configured to acquire a detection result of whether a Bluetooth module is set on the terminal; and a controlling unit 701, configured to determine the driver installation guide user interface to be displayed according to the detection result.

In certain embodiment(s), and when the detection result acquired by the acquiring unit 700 is that a Bluetooth module is installed on the terminal and the Bluetooth module is turned on, the driver installation guidance user interface is used to display a list of preset image forming devices, and the list of preset image forming devices include devices each provided with a Bluetooth module.

In certain embodiment(s), and when the detection result acquired by the acquiring unit 700 is that the terminal is provided with a Bluetooth module and the Bluetooth module is not turned on, the driver installation guide user interface is used to prompt the user to turn on the Bluetooth module.

In certain embodiment(s), and when the acquiring unit 700 obtains the detection result that the Bluetooth module is not installed on the terminal, the driver installation guidance user interface is used to display the driver installation options that may successfully install the driver, and the driver installation options that may successfully install the driver are determined based on the connection information between the image forming device corresponding to the driver and the terminal.

In certain embodiment(s), the acquiring unit 700 is further configured to acquire the image forming device selected by the user on the driver installation guide user interface.

In certain embodiment(s), the acquiring unit 700 is further configured to acquire wireless network configuration information configured for the image forming device, and the driver installation guidance control device further includes a sending unit for sending the wireless network configuration information to the image forming device.

In certain embodiment(s), the acquiring unit 700 is further configured to acquire a configuration result of the wireless network configuration performed by the image forming device based on the wireless network configuration.

In certain embodiment(s), the controlling unit 701 is further configured to determine whether to install the driver corresponding to the image forming device according to the configuration result.

When the configuration result obtained by the acquiring unit 700 is a failure, the controlling unit 701 is configured to display the driver installation options that may successfully install the driver, and the driver installation options that may successfully install the driver are determined by the connection information between the image forming device and the terminal.

After the acquiring unit 700 is used to obtain the configuration result of the wireless network configuration performed by the image forming device based on the wireless network configuration, the controlling unit 701 is also used to search for the image forming device, and when the search result fails, the controlling unit 701 displaying driver installation options that may successfully install the driver. The driver installation options that may successfully install the driver are determined according to the connection information between the image forming device corresponding to the driver and the terminal.

In certain embodiment(s), and when the search result is success, the controlling unit 701 is configued to determine to install the driver corresponding to the image forming device.

Ways of implementation of implementation example three and corresponding technical effects may be similar to other implementation examples described herein and are not reproduced or repeated for brevity.

### Implementation Example Four

The present disclosure in certain embodiment(s) provides a terminal, and the terminal may include the driver installation guidance control device described herein, such as the driver installation guidance control device described in relation to implementation example two.

Ways of implementation of implementation example four and corresponding technical effects may be similar to other implementation examples described herein and are not reproduced or repeated for brevity.

### Implementation Example Five

The present disclosure in certain embodiment(s) also provides a computer-readable storage medium, the computer-readable storage medium includes a stored program causes the device where the computer-readable storage medium is located to execute a driver installation guidance control method described herein.

Ways of implementation of implementation example five and corresponding technical effects may be similar to other implementation examples described herein and are not reproduced or repeated for brevity.

### Implementation Example Six

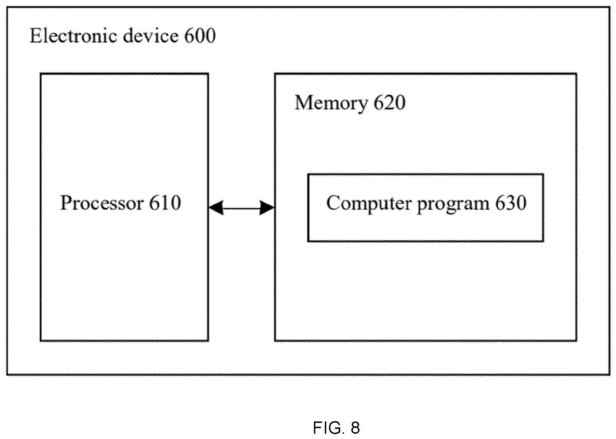

As schematically shown in FIG. 8, the present disclosure in certain embodiment(s) provides an electronic device 600, including a memory 620 and a processor 660. The memory 620 is used to store information including program instructions, and the processor 660 is used to control the execution of the program instructions. The program instructions, when loaded and executed by the processor, implement the steps of the driver installation guidance control method described herein. To avoid unwanted repeat, details are not reproduced here. Alternatively, when executed by the processor 660, the computer program realizes the functions applied to each model/unit in the image forming control device described herein. To avoid unwanted repeat, details are not reproduced here.

Those skilled in the art may understand that FIG. 8 is only an example illustration of the electronic device 600, and does not constitute a limitation to the computer device 600. The electronic device 600 may include more or fewer components than those shown in the figure, or combine certain components, or different components. For example, the electronic device 600 may also include input and output devices, network access devices, buses, or other suitable components.

The processor 660 may be a central processing unit (CPU), and may also be other general-purpose processors, digital signal processors (DSP), application specific integrated circuits (ASIC), field programmable gate array (FPGA) or other programmable logic devices, discrete gate or transistor logic devices, discrete hardware components, or the like. A general-purpose processor may be a microprocessor or may be any other suitable processor.

The memory 620 may be an internal storage unit of the electronic device 600, such as a hard disk or a memory of the electronic device 600.

The memory 620 may be an external storage device of the electronic device 600, such as a plug-in hard disk equipped on the electronic device 600, a smart memory card (SMC), a secure digital (SD) card, a flash memory card (Flash Card), or the like. The memory 620 may also be a memory on a server, and the computer program 630 stored in the server may be transmitted to other storage modules inside the electronic device by the network, so that the processor 660 may load and run the computer program 630. The memory 620 may also include both an internal storage unit of the electronic device 600 and an external storage device. The memory 620 is used to store computer programs and other programs and data desirable for the electronic device 600. The memory 620 may also be used to temporarily store data that has been output or will be output.

All or part of certain embodiment(s) of the present disclosure may be implemented by software, hardware, firmware or any combination thereof. When implemented using software, certain embodiment(s) of the present disclosure may be implemented in whole or in part in the form of a computer program product. The computer program product includes one or more computer instructions. When the computer instructions are loaded and executed on the computer, the processes or functions according to certain embodiment(s) of the present disclosure may be generated in whole or in part. The computer may be a general-purpose computer, a special purpose computer, a computer network, or any other programmable device. The computer instructions may be stored in a computer-readable medium, or may be transmitted from one computer-readable storage medium to another computer-readable storage medium. For example, the computer instructions may be transmitted from a website, a computer, a server, or a data center by wired connection (such as coaxial cable, optical fiber, Digital Subscriber Line (DSL)) or wireless connection (such as infrared, wireless, microwave, or the like) to another website, another computer, another server, or another data center. The computer-readable storage medium may be any suitable medium that is accessed by a computer, or a data storage device such as a server or a data center integrated with one or more available media. The available medium may be a magnetic medium (such as a floppy disk, a hard disk, or a magnetic tape), an optical medium (such as a high-density Digital Video Disc (DVD), or a semiconductor medium (such as a Solid-State Disk (SSD), or the like.

## Claims

1. A guidance control method for driver installation, wherein the driver is used by a terminal to convert job data provided by an application into data and instructions recognizable by an image forming device, the guidance control method executable on said terminal or on a guidance control device, the guidance control method comprising:
obtaining a detection result of whether said terminal is equipped with a Bluetooth module; and
according to the detection result, determining a driver installation user interface to be displayed;
**characterized in that**
when the detection result indicates that the terminal is equipped with the Bluetooth module and the Bluetooth module is not turned on, and the method further comprises:
displaying on the driver installation user interface a prompt to alert the user to turn on the Bluetooth module,
wherein when the detection result indicates that the terminal is equipped with the Bluetooth module and the Bluetooth module is turned on, the method further comprises:
displaying on the driver installation user interface a list of image forming devices, and image forming devices as displayed in the list are each equipped with the Bluetooth module, said list from which an image forming device is selected by the user for driver installation.

2. The guidance control method of claim 1, wherein the detection result indicates that the terminal is not equipped with the Bluetooth module, and the method further comprises:
determining driver installation options for installing a driver according to connection information between image forming devices and the terminal; and
displaying on the driver installation user interface the driver installation options.

3. The guidance control method of claim 1, further comprising:
obtaining an image forming device selected by a user through the driver installation user interface; and
acquiring wireless network configuration information configured for the image forming device as selected, and sending the wireless network configuration information to the image forming device as selected;
acquiring a configuration result performed by the image forming device based on the wireless network configuration information; and
determining whether to install a driver corresponding to the image forming device as selected according to the configuration result.

4. The guidance control method of claim 3, further comprising:
in response to a determination that the configuration result is failure, determining driver installation options according to connection information between the image forming device as selected and the terminal; and
displaying the driver installation options for installing the driver.

5. The guidance control method of claim 3, further comprising:
after acquiring a configuration result performed by the image forming device based on the wireless network configuration information,
searching for the image forming device, and
when the search result is failure, displaying driver installation options that may successfully install the driver;
wherein the driver installation options that may successfully install the driver are determined according to the connection information between the image forming device corresponding to the driver and the terminal.

6. The guidance control method of claim 5, further comprising:
when the search result is success, determining to install the driver corresponding to the image forming device.

7. A guidance control device for driver installation, wherein the driver is used by a terminal to convert job data provided by an application into data and instructions recognizable by an image forming device, said guidance control device comprising:
an acquiring unit (700), configured to acquire a detection result of whether a Bluetooth module is set on said terminal; and
a controlling unit (701), configured to determine the driver installation guide user interface to be displayed according to the detection result;
**characterized in that**
the guidance control device further comprises:
when the detection result acquired by the acquiring unit is that the terminal is provided with a Bluetooth module and the Bluetooth module is not turned on, the driver installation guide user interface is used to prompt the user to turn on the Bluetooth module; and
when the detection result acquired by the acquiring unit is that a Bluetooth module is installed on the terminal and the Bluetooth module is turned on, the driver installation guide user interface is used to display a list of preset image forming devices, and the list of preset image forming devices include devices each provided with a Bluetooth module, said list from which an image forming device is selected by the user for driver installation.

8. The guidance control device of claim 7, further comprising:
when the acquiring unit obtains the detection result that the Bluetooth module is not installed on the terminal, the driver installation guide user interface is used to display the driver installation options that may successfully install the driver, and the driver installation options that may successfully install the driver are determined based on the connection information between the image forming device corresponding to the driver and the terminal.

9. The guidance control device of claim 7, further comprising:
the acquiring unit is further configured to acquire the image forming device selected by the user on the driver installation guide user interface;
the acquiring unit is further configured to acquire wireless network configuration information configured for the image forming device, and the driver installation guidance control device further includes a sending unit for sending the wireless network configuration information to the image forming device;
the acquiring unit is further configured to acquire a configuration result of the wireless network configuration performed by the image forming device based on the wireless network configuration;
the controlling unit is further configured to determine whether to install the driver corresponding to the image forming device according to the configuration result.

10. The guidance control device of claim 9, further comprising:
after the acquiring unit is further configured to acquire a configuration result of the wireless network configuration performed by the image forming device based on the wireless network configuration,
the controlling unit is further configured to search for the image forming device, and when the search result fails, the controlling unit (701) displaying driver installation options that may successfully install the driver. The driver installation options that may successfully install the driver are determined according to the connection information between the image forming device corresponding to the driver and the terminal; when the search result is success, the controlling unit (701) is used to determine to install the driver corresponding to the image forming device.

11. A terminal, and the terminal comprises the guidance control device of any one of claims 7 to 10.

12. A non-transitory computer-readable storage medium comprising instructions which when executed by a guidance control device according to any of claims 7-10 or by a terminal according to claim 11, carry out the guidance control method according to any of claims 1 to 6.

## Patentansprüche

1. Anleitungssteuerungsverfahren zur Treiberinstallation, wobei der Treiber von einem Endgerät verwendet wird, um Auftragsdaten, die von einer Anwendung bereitgestellt werden, in Daten und Befehle umzuwandeln, die von einer Bildgebungsvorrichtung erkannt werden können, wobei das Anleitungssteuerungsverfahren auf dem Endgerät oder auf einer Anleitungssteuerungsvorrichtung ausführbar ist, wobei das Anleitungssteuerungsverfahren Folgendes umfasst:
Erhalten eines Erfassungsergebnisses, ob das Endgerät mit einem Bluetooth-Modul ausgestattet ist; und
gemäß dem Erfassungsergebnis, Bestimmen einer anzuzeigenden Treiberinstallationsbenutzeroberfläche;
**dadurch gekennzeichnet, dass**
wenn das Erfassungsergebnis angibt, dass das Endgerät mit dem Bluetooth-Modul ausgestattet ist und das Bluetooth-Modul nicht eingeschaltet ist, und das Verfahren weiter umfasst:
Anzeigen einer Aufforderung auf der Treiberinstallationsbenutzeroberfläche, um den Benutzer darauf aufmerksam zu machen, das Bluetooth-Modul einzuschalten,
wobei, wenn das Erfassungsergebnis angibt, dass das Endgerät mit dem Bluetooth-Modul ausgestattet ist und das Bluetooth-Modul eingeschaltet ist, das Verfahren weiter umfasst:
Anzeigen einer Liste von Bildgebungsvorrichtungen auf der Treiberinstallationsbenutzeroberfläche, und
wobei in der Liste angezeigte Bildgebungsvorrichtungen jeweils mit dem Bluetooth-Modul ausgestattet sind, wobei aus dieser Liste von dem Benutzer eine Bildgebungsvorrichtung zur Treiberinstallation ausgewählt wird.

2. Anleitungssteuerungsverfahren nach Anspruch 1, wobei das Erfassungsergebnis angibt, dass das Endgerät nicht mit dem Bluetooth-Modul ausgestattet ist, und das Verfahren weiter umfasst:
Bestimmen von Treiberinstallationsoptionen zum Installieren eines Treibers gemäß Verbindungsinformationen zwischen Bildgebungsvorrichtungen und dem Endgerät; und
Anzeigen der Treiberinstallationsoptionen auf der Treiberinstallationsbenutzeroberfläche.

3. Anleitungssteuerungsverfahren nach Anspruch 1, weiter umfassend:
Erhalten einer Bildgebungsvorrichtung, die von einem Benutzer über die Treiberinstallationsbenutzeroberfläche ausgewählt wird; und
Beziehen von Drahtlosnetzwerkkonfigurationsinformationen, die für die ausgewählte Bildgebungsvorrichtung konfiguriert sind, und Senden der Drahtlosnetzwerkkonfigurationsinformationen an die ausgewählte Bildgebungsvorrichtung;
Beziehen eines Ergebnisses einer Konfiguration, die von der Bildgebungsvorrichtung basierend auf den Drahtlosnetzwerkkonfigurationsinformationen durchgeführt wurde; und
Bestimmen, ob ein der ausgewählten Bildgebungsvorrichtung entsprechender Treiber gemäß dem Konfigurationsergebnis zu installieren ist.

4. Anleitungssteuerungsverfahren nach Anspruch 3, weiter umfassend:
in Reaktion auf eine Bestimmung, dass das Konfigurationsergebnis ein Fehlschlag ist, Bestimmen von Treiberinstallationsoptionen gemäß Verbindungsinformationen zwischen der ausgewählten Bildgebungsvorrichtung und dem Endgerät; und
Anzeigen der Treiberinstallationsoptionen zum Installieren des Treibers.

5. Anleitungssteuerungsverfahren nach Anspruch 3, weiter umfassend:
nach Beziehen eines Ergebnisses einer Konfiguration, die von der Bildgebungsvorrichtung basierend auf den Drahtlosnetzwerkkonfigurationsinformationen durchgeführt wurde,
Suchen nach der Bildgebungsvorrichtung, und
wenn das Suchergebnis ein Fehlschlag ist, Anzeigen von Treiberinstallationsoptionen, die den Treiber erfolgreich installieren können;
wobei die Treiberinstallationsoptionen, die den Treiber erfolgreich installieren können, gemäß den Verbindungsinformationen zwischen der dem Treiber entsprechenden Bildgebungsvorrichtung und dem Endgerät bestimmt werden.

6. Anleitungssteuerungsverfahren nach Anspruch 5, weiter umfassend:
wenn das Suchergebnis ein Erfolg ist, Bestimmen, den der Bildgebungsvorrichtung entsprechenden Treiber zu installieren.

7. Anleitungssteuerungsvorrichtung zur Treiberinstallation, wobei der Treiber von einem Endgerät verwendet wird, um Auftragsdaten, die von einer Anwendung bereitgestellt werden, in Daten und Befehle umzuwandeln, die von einer Bildgebungsvorrichtung erkannt werden, wobei die Anleitungssteuerungsvorrichtung Folgendes umfasst:
eine Bezugseinheit (700), die dazu konfiguriert ist, ein Erfassungsergebnis darüber zu beziehen, ob ein Bluetooth-Modul auf dem Endgerät vorhanden ist; und
eine Steuereinheit (701), die dazu konfiguriert ist, die anzuzeigende Treiberinstallationsanleitungsbenutzeroberfläche gemäß dem Erfassungsergebnis zu bestimmen;
**dadurch gekennzeichnet, dass**
die Anleitungssteuerungsvorrichtung weiter umfassend, dass:
wenn das von der Bezugseinheit bezogene Erfassungsergebnis ist, dass das Endgerät mit einem Bluetooth-Modul bereitgestellt ist und das Bluetooth-Modul nicht eingeschaltet ist, die Treiberinstallationsanleitungsbenutzeroberfläche verwendet wird, um den Benutzer aufzufordern, das Bluetooth-Modul einzuschalten; und
wenn das von der Bezugseinheit bezogene Erfassungsergebnis ist, dass ein Bluetooth-Modul auf dem Endgerät installiert ist und das Bluetooth-Modul eingeschaltet ist, die Treiberinstallationsanleitungsbenutzeroberfläche verwendet wird, eine Liste vorgegebener Bildgebungsvorrichtungen anzuzeigen, und die Liste vorgegebener Bildgebungsvorrichtungen Vorrichtungen beinhaltet, die jeweils mit einem Bluetooth-Modul bereitgestellt sind, wobei aus dieser Liste eine Bildgebungsvorrichtung von dem Benutzer zur Treiberinstallation ausgewählt wird.

8. Anleitungssteuerungsvorrichtung nach Anspruch 7, weiter umfassend, dass:
wenn die Bezugseinheit das Erfassungsergebnis erhält, dass das Bluetooth-Modul nicht auf dem Endgerät installiert ist, die Treiberinstallationsanweisungsbenutzeroberfläche verwendet wird, um die Treiberinstallationsoptionen anzuzeigen, die den Treiber erfolgreich installieren können, und die Treiberinstallationsoptionen, die den Treiber erfolgreich installieren können, basierend auf den Verbindungsinformationen zwischen der dem Treiber entsprechenden Bildgebungsvorrichtung und dem Endgerät bestimmt werden.

9. Anleitungssteuerungsvorrichtung nach Anspruch 7, weiter umfassend, dass:
die Bezugseinheit weiter dazu konfiguriert ist, die Bildgebungsvorrichtung zu beziehen, die von dem Benutzer auf der Treiberinstallationsanleitungsbenutzeroberfläche ausgewählt wurde;
die Bezugseinheit weiter dazu konfiguriert ist, für die Bildgebungsvorrichtung konfigurierte Drahtlosnetzwerkkonfigurationsinformationen zu beziehen, und die Treiberinstallationsanleitungsteuerungsvorrichtung weiter eine Sendeeinheit zum Senden der Drahtlosnetzwerkkonfigurationsinformationen an die Bildgebungsvorrichtung beinhaltet;
die Bezugseinheit weiter dazu konfiguriert ist, ein Ergebnis einer Konfiguration der Drahtlosnetzwerkkonfiguration zu beziehen, die von der Bildgebungsvorrichtung basierend auf der Drahtlosnetzwerkkonfiguration durchgeführt wurde;
die Steuereinheit weiter dazu konfiguriert ist, zu bestimmen, ob der der Bildgebungsvorrichtung entsprechende Treiber gemäß dem Konfigurationsergebnis zu installieren ist.

10. Anleitungssteuerungsvorrichtung nach Anspruch 9, weiter umfassend, dass:
nachdem die Bezugseinheit weiter dazu konfiguriert ist, ein Ergebnis einer Konfiguration der Drahtlosnetzwerkkonfiguration zu beziehen, die von der Bildgebungsvorrichtung basierend auf der Drahtlosnetzwerkkonfiguration durchgeführt wurde,
die Steuereinheit weiter dazu konfiguriert ist, nach der Bildgebungsvorrichtung zu suchen, und wenn das Suchergebnis fehlschlägt, die Steuereinheit (701) Treiberinstallationsoptionen anzeigt, die den Treibererfolgreich installieren können, wobei die Treiberinstallationsoptionen, die den Treiber erfolgreich installieren können, gemäß den Verbindungsinformationen zwischen der dem Treiber entsprechenden Bildgebungsvorrichtung und dem Endgerät bestimmt werden; wenn das Suchergebnis ein Erfolg ist, die Steuereinheit (701) dazu verwendet wird, zu bestimmen, den der Bildgebungsvorrichtung entsprechenden Treiber zu installieren.

11. Endgerät und das Endgerät umfasst die Anleitungssteuerungsvorrichtung nach einem der Ansprüche 7 bis 10.

12. Nichtflüchtiges computerlesbares Speichermedium, das Anweisungen umfasst, die, wenn sie von einer Anleitungssteuerungsvorrichtung nach einem der Ansprüche 7-10 oder von einem Endgerät nach Anspruch 11 ausgeführt werden, das Anleitungssteuerungsverfahren nach einem der Ansprüche 1 bis 6 durchführen.

## Revendications

1. Procédé de contrôle de guidage pour l'installation d'un pilote, dans lequel le pilote est utilisé par un terminal pour convertir des données de travail fournies par une application en données et instructions reconnaissables par un dispositif de formation d'image, le procédé de contrôle de guidage étant exécutable sur ledit terminal ou sur un dispositif de contrôle de guidage, le procédé de contrôle de guidage comprenant :
l'obtention d'un résultat de détection indiquant si ledit terminal est équipé ou non d'un module Bluetooth ; et
en fonction du résultat de détection, la détermination d'une interface utilisateur d'installation de pilote à afficher ;
**caractérisé en ce que**
lorsque le résultat de détection indique que le terminal est équipé du module Bluetooth et que le module Bluetooth n'est pas activé, le procédé comprend en outre :
l'affichage sur l'interface utilisateur d'installation de pilote d'une invite pour alerter l'utilisateur d'activer le module Bluetooth,
lorsque le résultat de détection indique que le terminal est équipé du module Bluetooth et que le module Bluetooth est activé, le procédé comprend en outre :
l'affichage sur l'interface utilisateur d'installation de pilote d'une liste de dispositifs de formation d'image,
les dispositifs de formation d'image tels qu'affichés dans la liste sont équipés chacun du module Bluetooth,
un dispositif de formation d'image est sélectionné par l'utilisateur dans ladite liste pour l'installation d'un pilote.

2. Procédé de contrôle de guidage selon la revendication 1, dans lequel le résultat de détection indique que le terminal n'est pas équipé du module Bluetooth, et le procédé comprend en outre :
la détermination d'options d'installation de pilote pour installer un pilote en fonction d'information de connexion entre des dispositifs de formation d'image et le terminal ; et
l'affichage des options d'installation de pilote sur l'interface utilisateur d'installation de pilote.

3. Procédé de contrôle de guidage selon la revendication 1, comprenant en outre :
l'obtention d'un dispositif de formation d'image sélectionné par un utilisateur via l'interface utilisateur d'installation de pilote ; et
l'acquisition d'information de configuration de réseau sans fil configurée pour le dispositif de formation d'image tel que sélectionné, et l'envoi de l'information de configuration de réseau sans fil au dispositif de formation d'image tel que sélectionné ;
l'acquisition d'un résultat de configuration mise en oeuvre par le dispositif de formation d'image sur la base de l'information de configuration de réseau sans fil ; et
la détermination du fait qu'il convient ou non d'installer un pilote correspondant au dispositif de formation d'image tel que sélectionné en fonction du résultat de configuration.

4. Procédé de contrôle de guidage selon la revendication 3, comprenant en outre :
en réponse à une détermination du fait que le résultat de configuration est un échec, la détermination d'options d'installation de pilote en fonction d'information de connexion entre le dispositif de formation d'image tel que sélectionné et le terminal ; et
l'affichage des options d'installation de pilote pour installer le pilote.

5. Procédé de contrôle de guidage selon la revendication 3, comprenant en outre :
après l'acquisition d'un résultat de configuration mise en oeuvre par le dispositif de formation d'image sur la base de l'information de configuration de réseau sans fil,
la recherche du dispositif de formation d'image, et
lorsque le résultat de recherche est un échec, l'affichage d'options d'installation de pilote qui peuvent installer le pilote avec succès ;
dans lequel les options d'installation de pilote qui peuvent installer le pilote avec succès sont déterminées en fonction de l'information de connexion entre le dispositif de formation d'image correspondant au pilote et le terminal.

6. Procédé de contrôle de guidage selon la revendication 5, comprenant en outre :
lorsque le résultat de recherche est un succès, la détermination qu'il convient d'installer le pilote correspondant au dispositif de formation d'image.

7. Dispositif de contrôle de guidage pour une installation de pilote, dans lequel le pilote est utilisé par un terminal pour convertir des données de travail fournies par une application en données et instructions reconnaissables par un dispositif de formation d'image, ledit dispositif de contrôle de guidage comprenant :
une unité d'acquisition (700), configurée pour acquérir un résultat de détection indiquant si un module Bluetooth est ou non défini sur ledit terminal ; et
une unité de contrôle (701), configurée pour déterminer l'interface utilisateur du guide d'installation de pilote à afficher en fonction du résultat de détection ;
**caractérisé en ce que**
le dispositif de contrôle de guidage comprend en outre :
lorsque le résultat de détection acquis par l'unité d'acquisition est que le terminal est pourvu d'un module Bluetooth et que le module Bluetooth n'est pas activé, l'utilisation de l'interface utilisateur du guide d'installation de pilote pour inviter l'utilisateur à activer le module Bluetooth ; et
lorsque le résultat de détection acquis par l'unité d'acquisition est qu'un module Bluetooth est installé sur le terminal et que le module Bluetooth est activé, l'utilisation de l'interface utilisateur du guide d'installation de pilote pour afficher une liste de dispositifs de formation d'image prédéfinis, la liste des dispositifs de formation d'image prédéfinis comprenant des dispositifs pourvus chacun d'un module Bluetooth, un dispositif de formation d'image étant sélectionné par l'utilisateur dans ladite liste pour l'installation d'un pilote.

8. Dispositif de contrôle de guidage selon la revendication 7, dans lequel :
lorsque l'unité d'acquisition obtient le résultat de détection selon lequel le module Bluetooth n'est pas installé sur le terminal, l'interface utilisateur du guide d'installation de pilote est utilisée pour afficher les options d'installation de pilote qui peuvent installer le pilote avec succès, et les options d'installation de pilote qui peuvent installer le pilote avec succès sont déterminées sur la base de l'information de connexion entre le dispositif de formation d'image correspondant au pilote et le terminal.

9. Dispositif de contrôle de guidage selon la revendication 7, dans lequel :
l'unité d'acquisition est en outre configurée pour acquérir le dispositif de formation d'image sélectionné par l'utilisateur sur l'interface utilisateur du guide d'installation de pilote ;
l'unité d'acquisition est en outre configurée pour acquérir de l'information de configuration de réseau sans fil configurée pour le dispositif de formation d'image, et le dispositif de contrôle de guidage d'installation de pilote comprend en outre une unité d'envoi pour envoyer l'information de configuration de réseau sans fil au dispositif de formation d'image ;
l'unité d'acquisition est en outre configurée pour acquérir un résultat de configuration de la configuration de réseau sans fil mise en oeuvre par le dispositif de formation d'image sur la base de la configuration de réseau sans fil ;
l'unité de contrôle est en outre configurée pour déterminer s'il convient ou non d'installer le pilote correspondant au dispositif de formation d'image en fonction du résultat de configuration.

10. Dispositif de contrôle de guidage selon la revendication 9, dans lequel :
après que l'unité d'acquisition est en outre configurée pour acquérir un résultat de configuration de la configuration de réseau sans fil mise en oeuvre par le dispositif de formation d'image sur la base de la configuration de réseau sans fil,
l'unité de contrôle est en outre configurée pour rechercher le dispositif de formation d'image, et lorsque le résultat de recherche est un échec, l'unité de contrôle (701) affiche les options d'installation de pilote qui peuvent installer le pilote avec succès, qui sont déterminées en fonction des information de connexion entre le dispositif de formation d'image correspondant au pilote et le terminal ; et lorsque le résultat de recherche est un succès, l'unité de contrôle (701) est utilisée pour déterminer qu'il convient d'installer le pilote correspondant au dispositif de formation d'image.

11. Terminal comprenant le dispositif de contrôle de guidage selon l'une quelconque des revendications 7 à 10.

12. Support de stockage non volatile lisible par un ordinateur comprenant des instructions qui, lorsqu'elles sont exécutées par un dispositif de contrôle de guidage selon l'une quelconque des revendications 7 à 10 ou par un terminal selon la revendication 11, exécutent le procédé de contrôle de guidage selon l'une quelconque des revendications 1 à 6.
